# EUROPEAN PATENT APPLICATION

(11) **EP 4 170 532 A1**
(43) Date of publication of application: **26.04.2023**
(21) Application number: 22188263.2
(22) Date of filing: 02.08.2022
(51) Int. Cl.: G06F 21/60, H04L 9/40

(54) **DATA MANAGEMENT PROGRAM, DATA MANAGEMENT METHOD, AND DATA MANAGEMENT DEVICE**

(30) Priority: 25.10.2021 JP 2021174135
(71) Applicant: FUJITSU LIMITED, Kawasaki-shi, Kanagawa 211-8588 (JP)
(72) Inventor: Mitsunobu, Hideki, Kawasaki-shi, Kanagawa, 211-8588 (JP)
(74) Representative: Hoffmann Eitle

(57) **Abstract**

A data management program including instructions which, when executed by a computer operable as a data management device included in a plurality of data management devices, cause the computer to execute processing including: in a case where information regarding a new event is registered in a first storage that stores information capable of specifying a relation between events shared by the plurality of data management devices, specifying an event linked to the new event by tracing the relation between events based on the information stored in the first storage; and in a case where an event to be monitored is included in the specified events linked to the new event, setting, for an issuer of the new event, an access right to data related to the event to be monitored stored in a second storage managed by a local device.

## Description

### FIELD

The embodiment discussed herein is related to a data management program, a data management method, and a data management device.

### BACKGROUND

In recent years, a system for utilizing data distributed between companies has been being developed. The data managed by the system includes, for example, data shared by participating companies and data managed by individual companies. The accessibility by another company to data managed by an individual company is controlled by, for example, the individual company manually setting an access policy.

As the prior art, for example, access authority to traceability information that is a target of an access request is checked, a location of the traceability information for which the access request has been made is specified, and the access request from a user is executed on the basis of the location of the traceability information. Furthermore, there is a technique for causing a specific third party who does not directly transmit/receive information to share the transmitted/received information. Furthermore, there is also a technique for allowing a user, a supplier, and a customer to view data by connection to a server system.

Japanese Laid-open Patent Publication No. 2008-139995, Japanese Laid-open Patent Publication No. 2010-266908, and U.S. Patent Application Publication No. 2003/0009397 are disclosed as related art.

### SUMMARY

### TECHNICAL PROBLEM

However, the existing techniques have a problem that it takes labor and time to set the access policy for controlling, for example, access by another company to data managed by the individual company.

In one aspect, an object of the present embodiment is to automate setting of access right to data related to events to be monitored.

### SOLUTION TO PROBLEM

According to an aspect of the embodiments, there is provided a data management program including instructions which, when executed by a computer operable as a data management device included in a plurality of data management devices, cause the computer to execute processing including: in a case where information regarding a new event is registered in a first storage that stores information capable of specifying a relation between events shared by the plurality of data management devices, specifying an event linked to the new event by tracing the relation between events based on the information stored in the first storage; and in a case where an event to be monitored is included in the specified events linked to the new event, setting, for an issuer of the new event, an access right to data related to the event to be monitored stored in a second storage managed by a local device.

### ADVANTAGEOUS EFFECTS OF INVENTION

According to one aspect of the present embodiment, an effect capable of automating setting of access right to data related to events to be monitored is exhibited.

### BRIEF DESCRIPTION OF DRAWINGS

FIG. 1 is an explanatory diagram illustrating an example of a data management method according to an embodiment;
FIG. 2 is an explanatory diagram illustrating a system configuration example of a data management system 200.
FIG. 3 is a block diagram illustrating a hardware configuration example of a data management server #i;
FIG. 4 is an explanatory diagram illustrating a data structure example of detailed data;
FIG. 5 is an explanatory diagram illustrating a data structure example of event information;
FIG. 6 is a block diagram illustrating a functional configuration example of the data management server #i;
FIG. 7 is an explanatory diagram illustrating an example of stored content in an arrival position table 700;
FIG. 8 is an explanatory diagram illustrating an example of stored content in a monitoring target table 800;
FIG. 9A is an explanatory diagram (No. 1) illustrating a registration example of event information in a global data space GS;
FIG. 9B is an explanatory diagram (No. 2) illustrating a registration example of event information in the global data space GS;
FIG. 9C is an explanatory diagram (No. 3) illustrating a registration example of event information in the global data space GS;
FIG. 10A is an explanatory diagram (No. 1) illustrating an update example of the stored content in the arrival position table 700;
FIG. 10B is an explanatory diagram (No. 2) illustrating an update example of the stored content in the arrival position table 700;
FIG. 10C is an explanatory diagram (No. 3) illustrating an update example of the stored content in the arrival position table 700;
FIG. 11 is an explanatory diagram illustrating an operation example of the data management server #i;
FIG. 12 is a flowchart (No. 1) illustrating an example of a data management processing procedure of the data management server #i; and
FIG. 13 is a flowchart (No. 2) illustrating an example of a data management processing procedure of the data management server #i.

### DESCRIPTION OF EMBODIMENTS

Hereinafter, embodiments of a data management program, a data management method, and a data management device will be described in detail with reference to the drawings.

### (Embodiment)

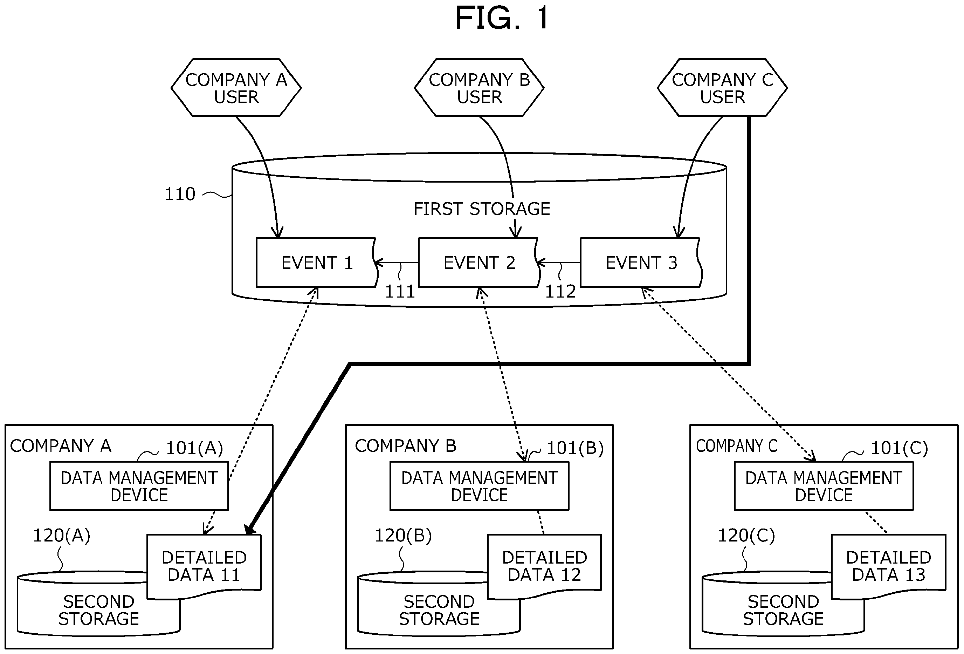

FIG. 1 is an explanatory diagram illustrating an example of a data management method according to an embodiment. In FIG. 1, a data management device 101 is a computer that manages data. The data management device 101 is provided for, for example, each data holder. The holder may be, for example, a company or an individual.

A first storage 110 is a storage shared by a plurality of data management devices 101 (data management devices 101(A), 101(B), and 101(C) in the example of FIG. 1), and stores data shared by the plurality of data management devices 101. A second storage 120 is a storage that each data management device 101 manages, and stores data that each data management device 101 manages.

Information that can specify a relation between events is stored in the first storage 110. An event is, for example, an event that occurs within a company or between companies. Specifically, for example, an event is data processing or transaction, goods production, processing, transaction, or the like. The information that can specify the relation between the events is, for example, an event identifier (ID) or a pointer to the ID of a past event related to the event. In the second storage 120, for example, detailed event data is stored.

In the example of FIG. 1, the data management device 101 of a company A is referred to as the "data management device 101(A)", the data management device 101 of a company B is referred to as the "data management device 101(B)", and the data management device 101 of a company C is referred to as the "data management device 101(C)". Furthermore, the second storage 120 that stores data managed by the company A is referred to as a "second storage 120(A)", the second storage 120 that stores data managed by the company B is referred to as a "second storage 120(B)", and the second storage 120 that stores data managed by the company C is referred to as a "second storage 120(C)".

In the first storage 110, for example, information that can specify a relation between events issued by the companies A to C is stored. Here, events 1 to 3 are issued in the order of "the event 1 -> the event 2 -> the event 3", and information that can specify the relation between the events 1 and 2 (corresponding to an arrow 111 from the event 2 to the event 1 in FIG. 1) and information that can specify the relation between the events 2 and 3 (corresponding to an arrow 112 from the event 3 to the event 2 in FIG. 1) are stored in the first storage 110.

Furthermore, in the second storage 120(A), for example, detailed data 11 of the event 1 issued by the company A is stored, and access from the other companies B and C is restricted. In the second storage 120(B), for example, detailed data 12 of the event 2 issued by the company B is stored, and access from the other companies A and C is restricted. In the second storage 120(C), for example, detailed data 13 of the event 3 issued by the company C is stored, and access from the other companies A and B is restricted.

Here, accessibility of detailed data managed by an individual company is determined on the basis of, for example, an access policy. The access policy corresponds to a rule for controlling access to data. The setting of the access policy is performed using, for example, application programming interface (API).

However, in existing specifications, an operator manually calls the API and performs the setting of the access policy. For example, in a case of allowing another company to access data that a certain company manages, a person in charge manually calls the API and performs the setting operation of the access policy. Therefore, in the existing specifications, there is a problem that the labor and time for setting the access policy increases as a transaction volume or the like increases, and data management becomes difficult.

Therefore, in the present embodiment, when a new event is issued and when the new event is an event leading to an event to be monitored, a data management method that sets an access right to data related to the event to be monitored for an issuer of the new event, will be described. Here, a processing procedure example of the data management device 101 ((1) to (3) below) will be described.

(1) In a case where information on a new event is registered in the first storage 110, the data management device 101 specifies events linked to the new event by tracing a relation between events based on information stored in the first storage 110. Registering the information on the new event in the first storage 110 corresponds to issuing the new event. The events linked to the new event are, for example, all events specified by sequentially tracing the relation between the events in a direction (upward direction) from the new event (child event) to related past events (parent events).

In the example of FIG. 1, a case where the "event 3" is issued by a user of the company C is assumed as the new event. Furthermore, a processing example of the data management device 101(A) will be described where the data management device 101 is assumed to be the "data management device 101(A) of the company A".

In this case, the information that can specify the relation between the new event 3 and the past event 2 (corresponding to the arrow 112 in FIG. 1) is registered in the first storage 110. Then, the data management device 101(A) specifies the events 1 and 2 linked to the new event 3 by tracing the relation (the arrows 111 and 112, for example) between events based on the information stored in the first storage 110.

(2) The data management device 101 determines whether the event to be monitored is included or not in the specified events linked to the new event. Here, the event to be monitored can be arbitrarily set. For example, the event to be monitored of the data management device 101(A) is an event issued by the company A.

In the example of FIG. 1, the event to be monitored of the data management device 101(A) is referred to as the "event 1". In this case, the data management device 101(A) determines that the event to be monitored 1 is included in the specified events 1 and 2 linked to the new event 3.

(3) In the case where the event to be monitored is included in the events linked to the new event, the data management device 101 sets, for the issuer of the new event, the access right to the data related to the event to be monitored stored in the second storage 120 that a local device manages. The data related to the event to be monitored is, for example, detailed data of the event to be monitored.

In the example of FIG. 1, the event to be monitored 1 is included in the events 1 and 2 linked to the new event 3. In this case, the data management device 101(A) sets, for the company C as the issuer of the new event 3, the access right to detailed data 11 of the event to be monitored 1 stored in the second storage 120(A) managed by the local device.

Note that, in a case where the event to be monitored is not included in the events linked to the new event 3, the data management device 101(A) does not set, for the company C as the issuer of the new event 3, the access right to the data (for example, the detailed data 11) related to the event to be monitored.

In this way, when the new event leading to the event to be monitored is issued, the data management device 101 can automatically set the access right to the data related to the event to be monitored for the issuer of the new event.

In the example of FIG. 1, when the new event 3 leading to the event to be monitored 1 is issued, the data management device 101(A) can automatically set the access right to the detailed data 11 of the event to be monitored 1 for the issuer of the new event 3. Thereby, the data management device 101(A) can allow the another company (company C) that has issued the event 3 having relevance to the event 1 of the local company (company A) to access the detailed data 11 of the event 1 of the local company. Furthermore, labor and time for the operator to set the access policy for the detailed data 11 of the event 1 can be reduced. Furthermore, the user of the company C becomes able to access the detailed data 11 of the company A whose access is restricted, and can confirm the details of the another event 1 having relevance to the new event 3 issued by the user.

### (System Configuration Example of Data Management System 200)

Next, a system configuration example of a data management system 200 including the data management devices 101 (for example, the data management devices 101(A), 101(B), and 101(C)) illustrated in FIG. 1 will be described. Here, a case where the data management device 101 illustrated in FIG. 1 is applied to a data management server in the data management system 200 will be described as an example. The data management system 200 is applied to, for example, a computer system for ensuring traceability of data across companies.

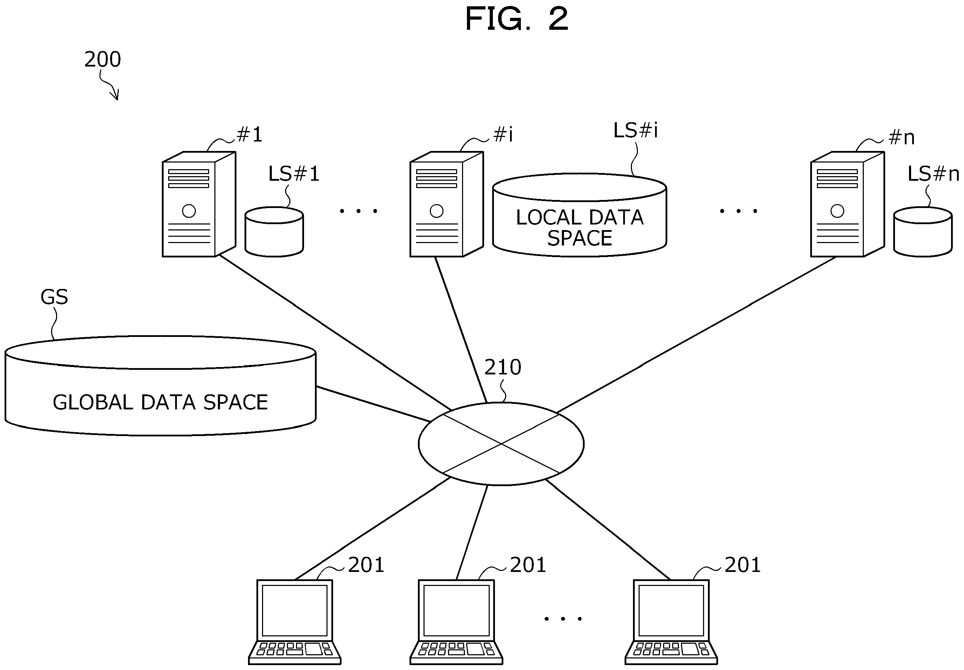

FIG. 2 is an explanatory diagram illustrating a system configuration example of the data management system 200. In FIG. 2, the data management system 200 includes data management servers #1 to #n (n: natural number of 2 or larger) and a plurality of user terminals 201. In the data management system 200, the data management servers #1 to #n and the user terminals 201 are connected via a wired or wireless network 210. The network 210 is, for example, the Internet, a local area network (LAN), a wide area network (WAN), or the like.

In the following description, an arbitrary data management server among the data management servers #1 to #n may be referred to as a "data management server #i".

Here, the data management server #i is a computer that has a local data space LS #i and controls access to data managed by an organization #i. The organization #i is, for example, a company, union, or the like. The local data space LS #i is a storage for storing data managed by the organization #i.

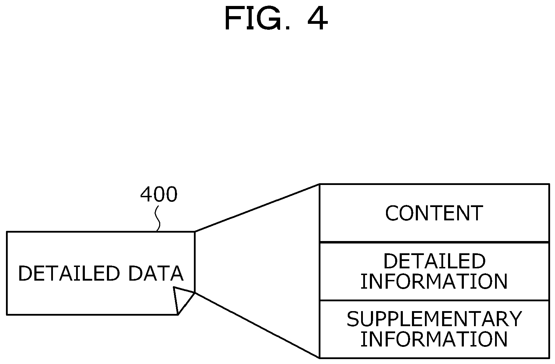

The data stored in the local data space LS #i is, for example, detailed data of an event issued by the organization #i. A data structure example of the detailed data of the event will be described below with reference to FIG. 4. The second storage 120 illustrated in FIG. 1 corresponds to, for example, the local data space LS #i.

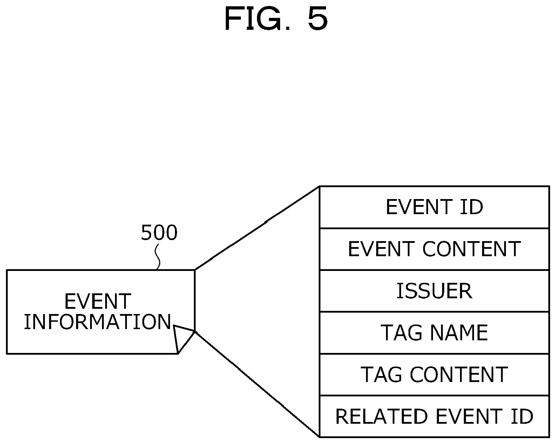

The data management servers #1 to #n share a global data space GS. The global data space GS is a storage for storing event information shared by the organizations #1 to #n. The event information is information of an event issued by each organization #i, and includes, for example, information that can specify the relation with another event. A data structure example of the event information will be described later with reference to FIG. 5.

The global data space GS may be implemented by, for example, a blockchain (distributed ledger system) formed by the data management servers #1 to #n. Furthermore, the global data space GS may be implemented by a database server accessible to the data management servers #1 to #n. The first storage 110 illustrated in FIG. 1 corresponds to, for example, the global data space GS.

The user terminal 201 is a computer used by a user of the organization #i. The user terminal 201 is, for example, a personal computer (PC), a tablet terminal, or the like. The user can register the event information in the global data space GS or register the detailed data in the local data space LS #i by calling an API using the user terminal 201, for example.

Furthermore, the user can access the detailed data in the local data space LS #i or can access the detailed data in the local data space LS #j of another organization #j (j = 1, 2,..., n, j ≠ i) by calling the API using the user terminal 201. However, the access to the detailed data in the local data space LS #j is allowed when the access right is set for the organization #i.

Note that another computer accessible to the data management server #i may include the local data space LS #i. In this case, the data management server #i controls, for example, the another computer to control the access to the data in the local data space LS #i.

### (Hardware Configuration Example of Data Management Server #i)

Next, a hardware configuration example of the data management server #i will be described.

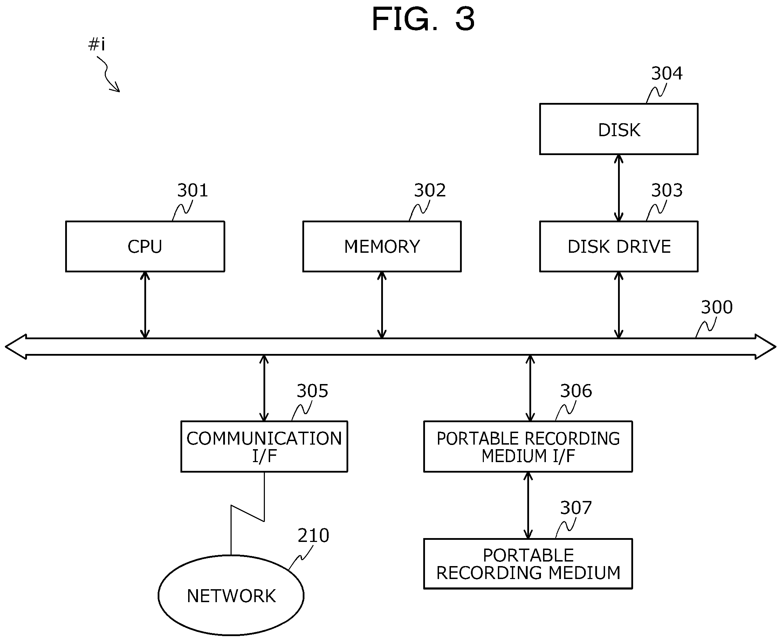

FIG. 3 is a block diagram illustrating a hardware configuration example of the data management server #i. In FIG. 3, the data management server #i includes a central processing unit (CPU) 301, a memory 302, a disk drive 303, a disk 304, a communication interface (I/F) 305, a portable recording medium I/F 306, and a portable recording medium 307. Furthermore, the configuration units are connected to each other by a bus 300.

Here, the CPU 301 controls the entire data management server #i. The CPU 301 may include a plurality of cores. The memory 302 includes, for example, a read only memory (ROM), a random access memory (RAM), a flash ROM, and the like. Specifically, for example, the flash ROM stores an operating system (OS) program, the ROM stores application programs, and the RAM is used as a work area for the CPU 301. The program stored in the memory 302 is loaded to the CPU 301 to cause the CPU 301 to execute coded processing.

The disk drive 303 controls read/write of data from/to the disk 304 under the control of the CPU 301. The disk 304 stores data written under the control of the disk drive 303. Examples of the disk 304 include a magnetic disk, an optical disk, and the like.

The communication I/F 305 is connected to the network 210 through a communication line and is connected to an external computer (for example, the user terminal 201 illustrated in FIG. 2) via the network 210. Then, the communication I/F 305 manages an interface between the network 210 and the inside of the device, and controls input and output of data from the external computer. For example, a modem, a LAN adapter, or the like may be employed as the communication I/F 305.

The portable recording medium I/F 306 controls read/write of data from/to the portable recording medium 307 under the control of the CPU 301. The portable recording medium 307 stores data written under the control of the portable recording medium I/F 306. Examples of the portable recording medium 307 include a compact disc (CD)-ROM, a digital versatile disk (DVD), a universal serial bus (USB) memory, and the like.

Note that the data management server #i may include, for example, an input device, a display, or the like in addition to the above-described configuration units. Furthermore, the user terminal 201 illustrated in FIG. 2 can be implemented by a hardware configuration similar to the data management server #i. However, the user terminal 201 includes, for example, an input device, a display, or the like, in addition to the above-described configuration units.

### (Data Structure Example of Detailed Data)

Next, a data structure example of the detailed data of the event stored in the local data space LS #i will be described with reference to FIG. 4. In the detailed data, for example, information whose amount of data is too large to be recorded as the event information, such as information of a product to be traded or content of the product itself is included. Furthermore, in the detailed data, for example, information that is highly confidential and should not be recorded in the event information is included.

FIG. 4 is an explanatory diagram illustrating a data structure example of the detailed data. In FIG. 4, detailed data 400 includes content, detailed information, and supplementary information. The content is, for example, content such as an image, sound, and the like of a product to be sold. The detailed information is, for example, detailed information such as size, sale date, color, and size of the product. The supplementary information is, for example, supplementary information that does not need to be described in a trail (event information) such as personal information and related information.

The detailed data 400 is determined to be accessible or not on the basis of the access policy, for example, and is treated as information that can be accessed by only an authorized person.

### (Data Structure Example of Event Information)

Next, a data structure example of the event information stored in the global data space GS will be described with reference to FIG. 5.

FIG. 5 is an explanatory diagram illustrating a data structure example of event information. In FIG. 5, event information 500 includes an event ID, event content, an issuer, a tag name, tag content, and a related event ID. Here, the event ID is identification information that uniquely identifies the event. The event content is content of the event (arbitrary character string).

The issuer is an organization name that has issued the event. The issuer is, for example, the organization name to which a registrant who has registered the event information belongs. The tag name is a name of a tag included in the event information. The tag content is content of the tag (arbitrary character string). The related event ID is an event ID of a related past event.

The related past event is, for example, another event that is directly related to the event identified by the event ID. Two or more related past events may exist. Furthermore, the related past events may not exist. The related event ID is specified by the registrant when the registrant registers the event information in the global data space GS, for example.

Note that, in the event information 500, the event content may not be included or two or more pieces of event content may be included. Furthermore, in the event information 500, the tag name and the tag content may not be included or two or more sets of tag name and tag content may be included.

### (Functional Configuration Example of Data Management Server #i)

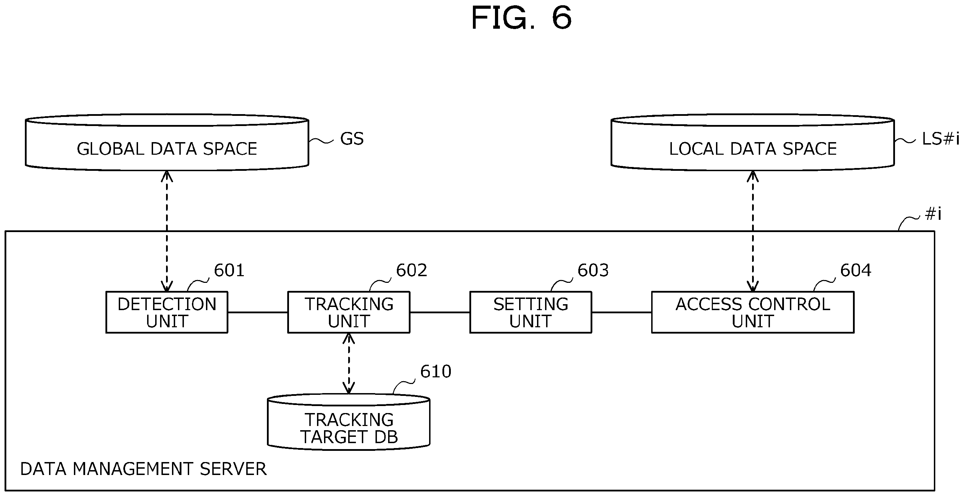

FIG. 6 is a block diagram illustrating a functional configuration example of the data management server #i. In FIG. 6, the data management server #i includes a detection unit 601, a tracking unit 602, a setting unit 603, and an access control unit 604. The detection unit 601 to the access control unit 604 have functions serving as a control unit, and specifically, those functions are implemented by causing the CPU 301 to execute the program stored in the storage device such as the memory 302, the disk 304, or the portable recording medium 307 illustrated in FIG. 3, or by the communication I/F 305, for example. A processing result of each functional unit is stored in, for example, a storage device such as the memory 302 or the disk 304.

The detection unit 601 detects that the event information regarding the new event has been registered in the global data space GS. Here, the event information regarding the new event is information that can specify the relation between the new event and the past event, and is, for example, the event information 500 as illustrated in FIG. 5.

The registration of the event information in the global data space GS corresponds to issuance of the new event. For example, in a case where an event such as data processing or transaction occurs in the organization #i, the detailed data of the event is registered in the local data space LS #i, and the event information of the event is registered in the global data space GS.

Specifically, for example, the detection unit 601 detects that the user of the local organization #i has registered the event information in the global data space GS using the API. In this case, the detection unit 601 transmits an event registration notification to, for example, another data management server #j. The event registration notification indicates that the event information regarding the new event has been registered in the global data space GS.

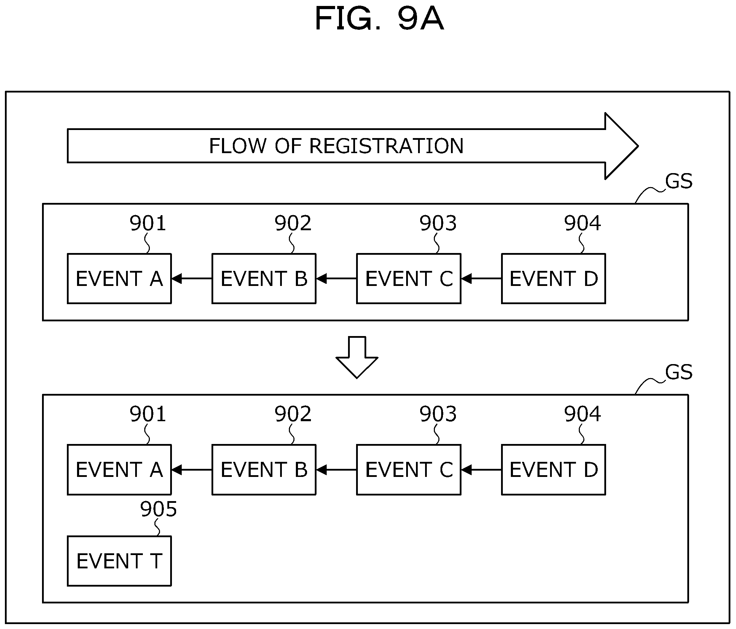

Furthermore, the detection unit 601 detects that the event information regarding the new event has been registered in the global data space GS in a case of receiving the event registration notification from another data management server #j. Note that a registration example of the event information in the global data space GS will be described below using FIGs. 9A to 9C.

In the case where the event information regarding the new event is registered in the global data space GS, the tracking unit 602 specifies the events linked to the new event by tracing the relation between the events based on the information stored in the global data space GS. Specifically, for example, the tracking unit 602 specifies the events linked to the new event by tracing the relation between the events in the direction (upward direction) from the new event to the related past events.

More specifically, for example, the tracking unit 602 records information indicating the relation between the new event and the past event in a tracking target database (DB) 610 each time registration of the event information regarding the new event is registered. The tracking target DB 610 is an example of a storage unit of a local server that stores the information indicating the relation between the events based on the information (event information) stored in the global data space GS. Furthermore, there may be another event (and a further past event) linked to the past event related to the new event. In this case, when recording the information indicating the relation between the new event and the past event, the tracking unit 602 records information indicating the another event in the tracking target DB 610 in association with the new event.

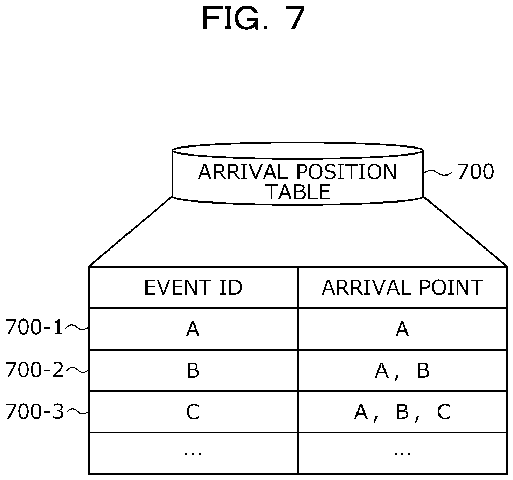

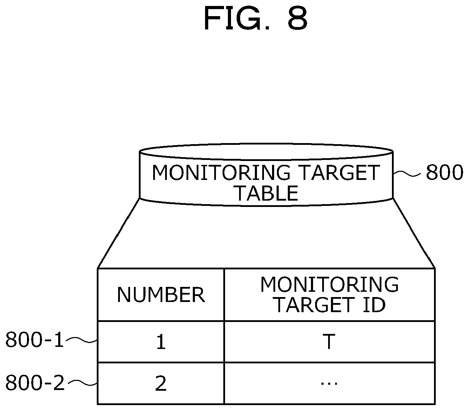

The tracking target DB 610 includes, for example, an arrival position table 700 illustrated in FIG. 7 to be described below and a monitoring target table 800 illustrated in FIG. 8 to be described below. The tracking target DB 610 is implemented by, for example, a storage device such as the memory 302 or the disk 304 illustrated in FIG. 3. Here, stored content in the arrival position table 700 will be described.

FIG. 7 is an explanatory diagram illustrating an example of stored content in the arrival position table 700. In FIG. 7, the arrival position table 700 has fields for event IDs and arrival points, and stores arrival position information (for example, arrival position information 700-1 to 700-3) as records by setting information in each field.

Here, the event ID is identification information that uniquely identifies the event. The arrival point indicates a reachable position from the event identified by the event ID. However, the arrival point also includes the event identified by the event ID. The arrival point corresponds to the information that can specify the events linked to the event identified by the event ID.

Specifically, for example, the tracking unit 602 refers to the event information (for example, the event information 500) of the new event stored in the global data space GS, and acquires the event ID and the related event ID of the new event. The related event ID is the event ID of the past event related to the new event.

Then, the tracking unit 602 records the acquired related event ID in the arrival point in the arrival position table 700 in association with the event ID of the new event. Furthermore, when there is a past event further related to the past event related to the new event, the tracking unit 602 specifies the event linked to the new event by tracing the relation between the events in the upward direction (child event -> parent event) on the basis of the related event ID.

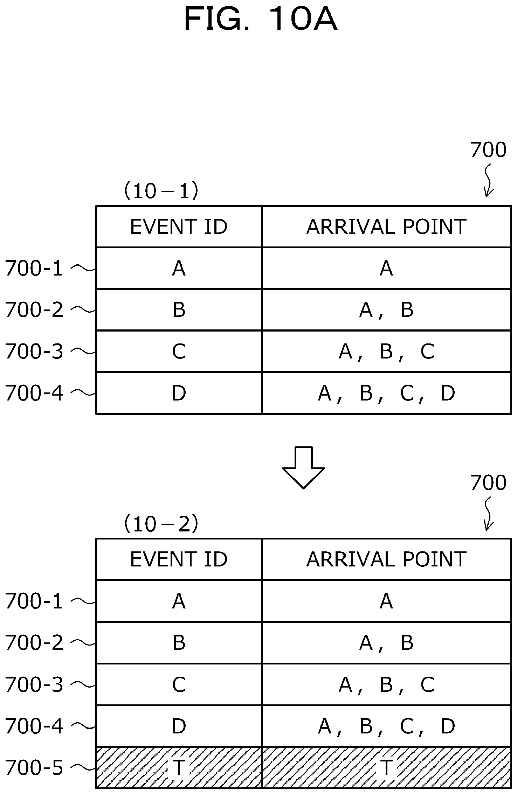

Then, the tracking unit 602 records the event ID of the specified another event in the arrival point in the arrival position table 700 in association with the event ID of the new event. Note that an update example of the stored content in the arrival position table 700, which is updated in response to registration of the event information of the new event in the global data space GS, will be described below with reference to FIGs. 10A to 10C.

In this way, the tracking unit 602 can specify the event linked to the new event by tracing the relation between the events. Furthermore, the tracking unit 602 can specify the event linked to the new event by referring to the arrival position table 700.

In the following description, the event with an event ID "$" may be referred to as an "event $". For example, arrival position information 700-3 illustrated in FIG. 7 indicates arrival points "A, B, and C" of the event C. According to the arrival points "A, B, and C", the events A and B linked to the event C can be specified.

Furthermore, the tracking unit 602 determines whether the event to be monitored is included or not in the specified events linked to the new event. Specifically, for example, the tracking unit 602 determines whether the event to be monitored is included or not in the events linked to the new event by referring to the monitoring target table 800 illustrated in FIG. 8. Here, the stored content in the monitoring target table 800 will be described.

FIG. 8 is an explanatory diagram illustrating an example of stored content in the monitoring target table 800. In FIG. 8, the monitoring target table 800 has fields for numbers and monitoring target IDs, and stores monitoring target information 800-1 and 800-2 as records by setting information in each field.

Here, the number is a number (item number) assigned to the monitoring target ID. The monitoring target ID is the event ID of the event to be monitored. For example, the monitoring target information 800-1 indicates the monitoring target ID "T" of the number "1".

More specifically, for example, the tracking unit 602 refers to the arrival position table 700 and specify the arrival point corresponding to the event ID of the new event. Next, the tracking unit 602 refers to the monitoring target table 800 and determines whether the event to be monitored is included or not in the specified arrival point. Taking the monitoring target information 800-1 as an example, the tracking unit 602 determines that the event to be monitored is included in the case where the event ID "T" is included in the specified arrival point.

In the case where the event to be monitored is included in the specified events linked to the new event, the setting unit 603 sets, for the issuer of the new event, the access right to data related to the event to be monitored stored in the local data space LS #i managed by the local server. Here, the data related to the event to be monitored is the detailed data of the event to be monitored (for example, the detailed data 400).

Specifically, for example, the setting unit 603 calls the API for setting the access policy, and sets the access right to the detailed data of the event to be monitored for the issuer of the new event, using the event ID of the event to be monitored and the organization name of the issuer (another organization #j) of the new event as arguments. The organization name of the issuer of the new event is specified from, for example, the event information of the new event (for example, the issuer of the event information 500).

Thereby, the access policy for allowing the access to the detailed data of the event to be monitored can be set for the another organization #j as the issuer of the new event.

The access control unit 604 controls the access to the local data space LS #i on the basis of the set access right. For example, it is supposed that an access request to the data (target data) in the local data space LS #i is given by the user of another organization #j. In this case, the access control unit 604 refers to the access policy and allows the access to the target data when the access right to the target data is set for the another organization #j. Meanwhile, in a case where the access right to the target data is not set for the another organization #j, the access control unit 604 does not allow the access to the target data.

Furthermore, in the case where the event to be monitored is not included in the specified events linked to the new event, the setting unit 603 does not set, for the issuer of the new event, the access right to data related to the event to be monitored stored in the local data space LS #i that the local server manages.

Thereby, it is possible to prevent the detailed data of the event to be monitored from being accessed by the issuer of the new event not having relevance to the event to be monitored.

Furthermore, in the case where the event to be monitored is included in the specified events linked to the new event, the setting unit 603 may determine whether the issuer of the new event is registered or not in a blacklist. Here, the blacklist is information in which a specific person who is not allowed to access the data that the local organization #i manages is registered. For example, an organization with unreliable data handling is set in the blacklist. For example, the blacklist is created in advance and is stored in a storage device such as the memory 302 or the disk 304.

Here, in the case where the issuer of the new event is not registered in the blacklist, the setting unit 603 sets the access right to data related to the event to be monitored stored in the local data space LS #i that the local server manages, for the issuer of the new event. On the other hand, in the case where the issuer of the new event is registered in the blacklist, the setting unit 603 may not set the access right to the data related to the event to be monitored for the issuer of the new event.

Thereby, in the case where the issuer of the new event is an unreliable organization even if the event that the local organization #i issues is linked to the new event, it is possible to perform control such that access to the detailed data of the event to be monitored is not allowed.

Furthermore, in the case where the event to be monitored is not included in the specified events linked to the new event, the setting unit 603 may determine whether the issuer of the new event is registered or not in a whitelist. Here, the whitelist is information in which a specific person who is allowed to access the data that the local organization #i manages is registered. For example, an organization with reliable data handling is set in the whitelist. For example, the whitelist is created in advance and is stored in a storage device such as the memory 302 or the disk 304.

Here, in the case where the issuer of the new event is registered in the whitelist, the setting unit 603 may set the access right to the data related to the event to be monitored stored in the local data space LS #i for the issuer of the new event. On the other hand, in the case where the issuer of the new event is not registered in the whitelist, the setting unit 603 does not set the access right to the data related to the event to be monitored for the issuer of the new event.

Thereby, in the case where the issuer of the new event is a reliable organization even if the event that the local organization #i issues is not linked to the new event, it is possible to perform control such that access to the detailed data of the event to be monitored is allowed.

Furthermore, in the case where the event to be monitored is included in the specified events linked to the new event, the tracking unit 602 may calculate a distance between the new event and the event to be monitored by tracing the relation between the events based on the information stored in the global data space GS. Specifically, for example, the tracking unit 602 may calculate the number of events passed from the new event to the event to be monitored as the distance between the new event and the event to be monitored.

Furthermore, in a case where the calculated distance is equal to or larger than a threshold, the setting unit 603 may not set the access right to the data related to the event to be monitored for the issuer of the new event. The threshold can be arbitrarily set.

Thereby, it is possible to prevent the access right to the detailed data of the event to be monitored from being set for the issuer of the new event having little relevance to the new event even if the event that the local organization #i issues is linked to the new event.

Note that, in the above description, the data management server #i of each organization #i sets the access right to the data that the local organization manages, but the present embodiment is not limited to this case. For example, it is supposed that authorization for an external computer to set the access right to the data that each organization #i manages can be obtained from each organization #i. In this case, the function unit of each data management server #i may be implemented by the external computer.

Specifically, for example, an external server that can set the access right to the data that each of the organizations #1 to #n manages may be provided. In this case, when the information regarding the new event is registered in the global data space GS, for example, the external server specifies the events linked to the new event by tracing the relation between the events based on the information stored in the global data space GS.

Then, in the case where the event to be monitored of the organization #i is included in the specified events linked to the new event, the external server sets, for the issuer (another organization #j) of the new event, the access right to the data related to the event to be monitored stored in the local data space LS #i that the organization #i manages. Thereby, when the new event leading to the event of the organization #i is issued, the external server can automatically set, for the another organization #j, the access right to the data that the organization #i manages (for example, the detailed data of the event to be monitored).

Furthermore, in the case where the event to be monitored of the organization #i is included in the events linked to the new event, for example, the external server may set, for the issuer (organization #i) of the event to be monitored, the access right to the data related to the new event stored in the local data space LS #j that the another organization #j manages. Thereby, when the new event leading to the event of the organization #i is issued, the external server can automatically set, for the organization #i, the access right to the data that the another organization #j manages (for example, the detailed data of the new event).

### (Registration Example of Event Information in Global Data Space GS)

Next, a registration example of the event information in the global data space GS will be described with reference to FIGs. 9A to 9C. Furthermore, an update example of the stored content in the arrival position table 700, which is updated in response to registration of the event information of the new event in the global data space GS, will be described below with reference to FIGs. 10A to 10C.

FIGs. 9A to 9C are explanatory diagrams illustrating a registration example of event information in the global data space GS. FIGs. 10A to 10C are explanatory diagrams illustrating an update example of the stored content in the arrival position table 700; Note that, in FIGs. 10A to 10C, (10-1) to (10-6) illustrate transition of the stored content in the arrival position table 700.

In FIG. 9A (upper row), event information 901 of the event A, event information 902 of the event B, event information 903 of the event C, and event information 904 of the event D are registered in the global data space GS. Here, it is assumed that the events A, B, C, and D are issued in the order of "A -> B -> C -> D", and the event information 901 to 904 are registered in the order of "901 -> 902 -> 903 -> 904".

(10-1) in FIG. 10A illustrates the stored contents in the arrival position table 700 when the event information 904 is registered in the global data space GS. Arrival position information 700-1 to 700-4 are stored in the arrival position table 700.

Here, it is assumed that event information 905 of a new event T is registered in the global data space GS as illustrated in FIG. 9A (lower row). Furthermore, it is assumed that a past event related to the new event T is not specified when the new event T is issued.

In this case, as illustrated in (10-2) of FIG. 10A, the tracking unit 602 records arrival position information 700-5 for the new event T in the arrival position table 700. Since there is no past event related to the new event T, only "T" is set for the arrival point of the arrival position information 700-5.

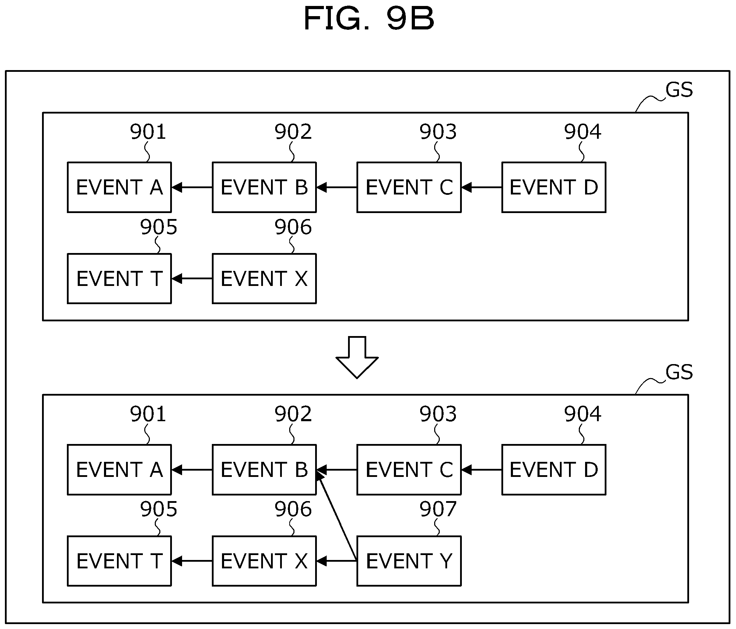

Next, it is assumed that event information 906 of a new event X is registered in the global data space GS as illustrated in FIG. 9B (upper row). Furthermore, it is assumed that the past event T related to the new event X is specified when the new event X is issued.

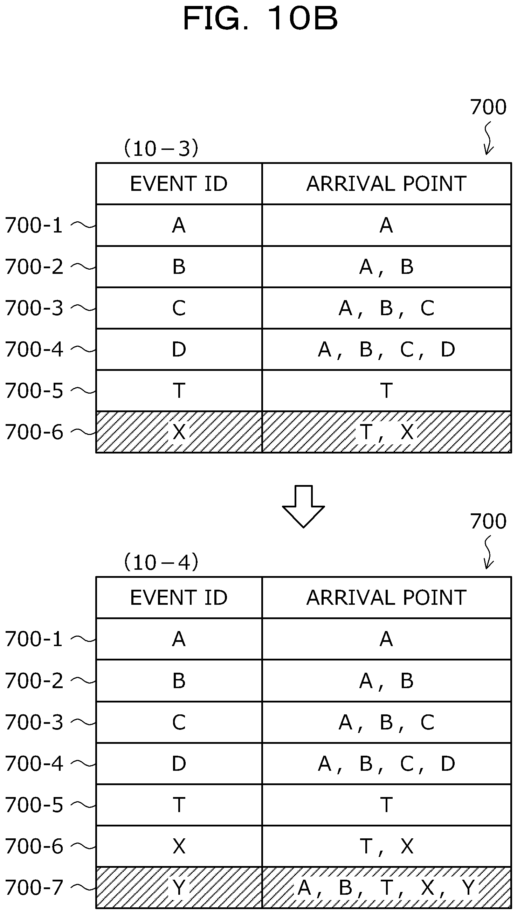

In this case, as illustrated in (10-3) of FIG. 10B, the tracking unit 602 records arrival position information 700-6 for the new event X in the arrival position table 700. Here, there is the past event T related to the new event X. Therefore, "T, X" indicating reachable positions by tracing the relation between events is set to the arrival points of the arrival position information 700-6.

Next, it is assumed that event information 907 of a new event Y is registered in the global data space GS as illustrated in FIG. 9B (lower row). Furthermore, it is assumed that the past events B and X related to the new event Y is specified when the new event Y is issued.

In this case, as illustrated in (10-4) of FIG. 10B, the tracking unit 602 records arrival position information 700-7 for the new event Y in the arrival position table 700. Here, there are the past events B and X related to the new event Y. Therefore, "A, B, T, X, Y" indicating reachable positions by tracing the relation between events is set to the arrival points of the arrival position information 700-7.

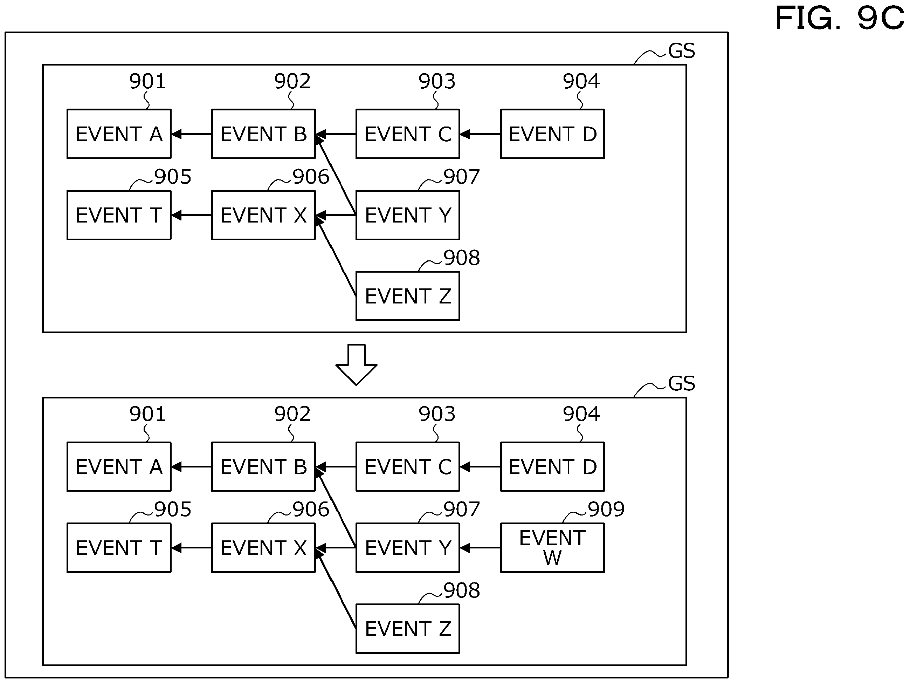

Next, it is assumed that event information 908 of a new event Z is registered in the global data space GS as illustrated in FIG. 9C (upper row). Furthermore, it is assumed that the past event X related to the new event Z is specified when the new event Z is issued.

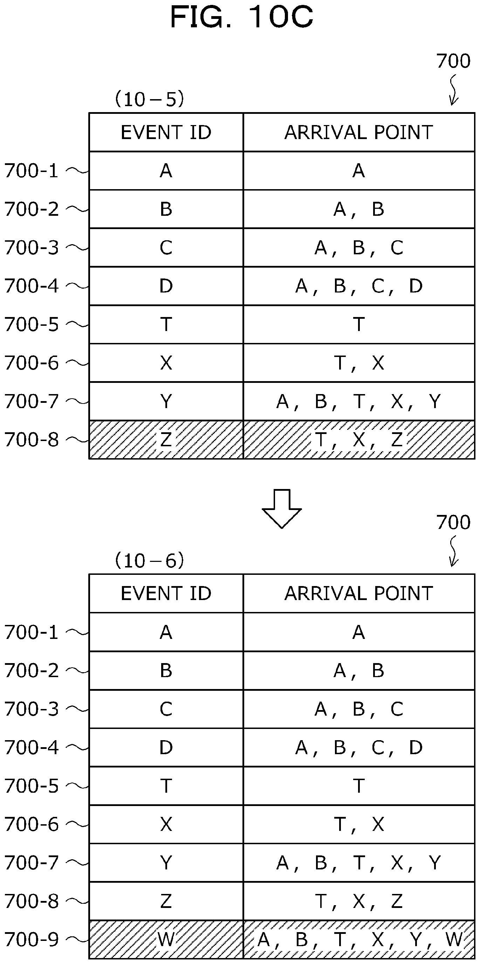

In this case, as illustrated in (10-5) of FIG. 10C, the tracking unit 602 records arrival position information 700-8 for the new event Z in the arrival position table 700. Here, there is the past event X related to the new event Z. Therefore, "T, X, Z" indicating reachable positions by tracing the relation between events is set to the arrival points of the arrival position information 700-8.

Next, it is assumed that event information 909 of a new event W is registered in the global data space GS as illustrated in FIG. 9C (lower row). Furthermore, it is assumed that the past event Y related to the new event W is specified when the new event W is issued.

In this case, as illustrated in (10-6) of FIG. 10C, the tracking unit 602 records arrival position information 700-9 for the new event W in the arrival position table 700. Here, there is the past event Y related to the new event W. Therefore, "A, B, T, X, Y, W" indicating reachable positions by tracing the relation between events is set to the arrival points of the arrival position information 700-9.

Note that the tracking unit 602 may assign a distance from the new event to each event ID included in the arrival point. The distance from the new event is calculated according to, for example, the number of events passed from the new event to each event by tracing the relation between the events in the upward direction. For example, the distance from the new event W to the event Y is "1 = the number of events passed from the new event W to the event Y (0) + 1". Furthermore, the distance from the new event W to the event T is "3 = the number of events passed from the new event W to the event Y (2) + 1". In this case, the arrival points of the arrival position information 700-9 are, for example, "A(3), B(2), T(3), X(2), Y(1), and W(0)".

### (Operation Example of Data Management Server #i)

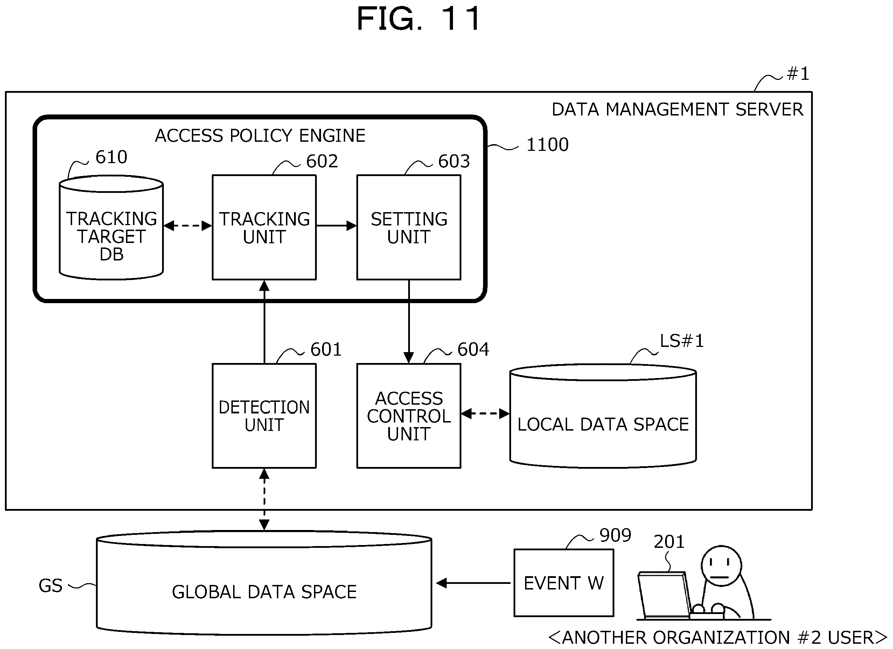

Next, an operation example of the data management server #i will be described with reference to FIG. 11.

FIG. 11 is an explanatory diagram illustrating an operation example of the data management server #i. Here, the data management server #i of the organization #i is referred to as the "data management server #1 of the organization #1". Furthermore, an operation example of the data management server #1 when a user of another organization #2 registers the event information 909 of the new event W in the global data space GS using the user terminal 201 will be described. The tracking unit 602, the setting unit 603, and the tracking target DB 610 are implemented by, for example, an access policy engine 1100 provided for each data management server #i.

First, in a case where the fact that the event information 909 for the new event W has been registered in the global data space GS is detected by the detection unit 601, the tracking unit 602 records the arrival position information 700-9 for the new event W in the arrival position table 700 in the tracking target DB 610 (see FIG. 10C).

Then, the tracking unit 602 refers to the arrival position table 700 in the tracking target DB 610 and specifies an event linked to the new event W. Here, it is assumed that the events "A, B, T, X, and Y" linked to the new event W are specified from the arrival position information 700-9 (see FIG. 10C) in the arrival position table 700.

### Next, the tracking unit 602 refers to the monitoring target table 800 (see

FIG. 8) in the tracking target DB 610, and determines whether the event to be monitored is included or not in the specified other events "A, B, T, X, and Y". Here, the event to be monitored of the data management server #1 is referred to as the "event T". In this case, the tracking unit 602 determines that the event to be monitored T is included in the specified events "A, B, T, X, and Y" linked to the new event W.

In the case where the event to be monitored T is included in the specified events "A, B, T, X, and Y" linked to the new event W, the setting unit 603 sets, for the issuer (another organization #2) of the new event W, the access right to the detailed data of the event to be monitored T stored in the local data space LS #1.

Specifically, for example, the setting unit 603 calls the API for setting the access policy, and sets, for the another organization #2, the access right to the detailed data of the event to be monitored T, using the event ID "T" of the event to be monitored T and the organization name of the another organization #2 as arguments. Thereby, the access policy for allowing the access to the detailed data of the event to be monitored T is set for the another organization #j as the issuer of the new event W.

As a result, in a case where, for example, the access request to the detailed data of the event T in the local data space LS #1 is given by the user of the another organization #2, the access control unit 604 refers to the access policy and allows the access to the detailed data of the event T.

### (Data Management Processing Procedure of Data Management Server #i)

Next, the data management processing procedure of the data management server #i will be described.

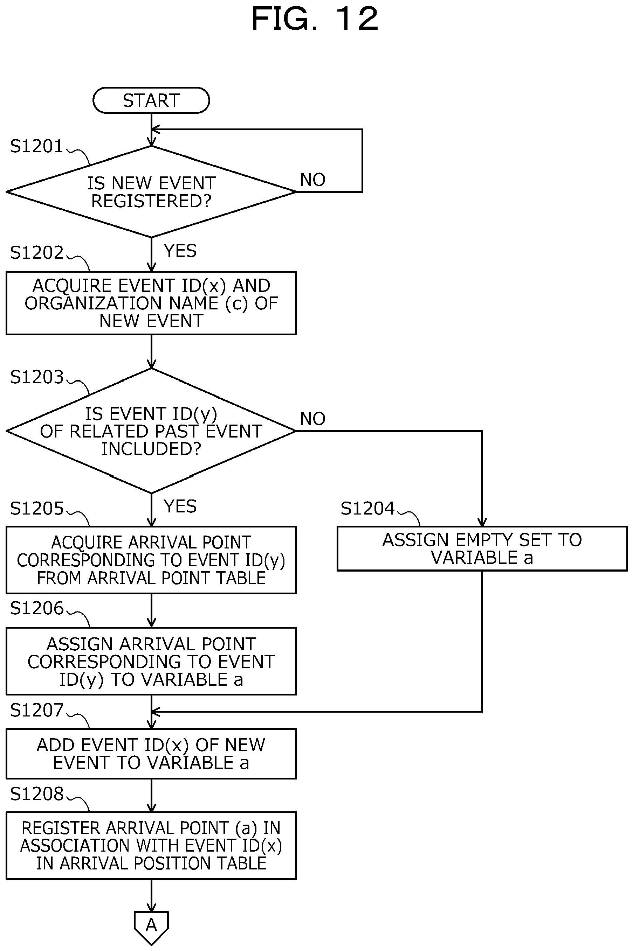

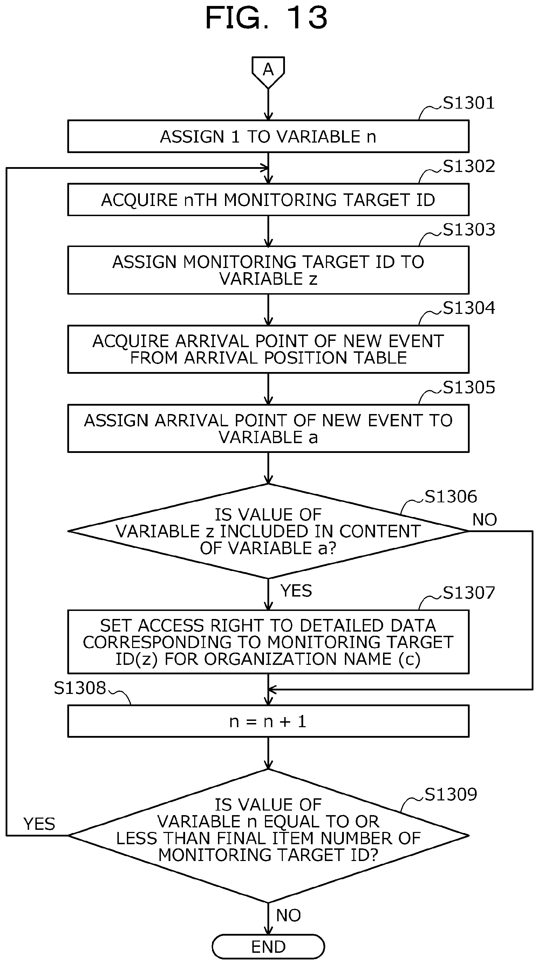

FIGs. 12 and 13 are flowcharts illustrating an example of a data management processing procedure of the data management server #i. In the flowchart of FIG. 12, first, the data management server #i determines whether the event information regarding the new event is registered or not in the global data space GS (step S1201).

Here, the data management server #i waits for registration of the event information regarding the new event (step S1201: No). Then, in the case where the event information regarding the new event is registered (step S1201: Yes), the data management server #i acquires the event ID (x) of the new event and the organization name (c) of the issuer of the new event from the event information regarding the new event (step S1202).

Next, the data management server #i determines whether the event ID (y) of the past event related to the new event is included or not in the event information regarding the new event (step S1203). Here, in the case where the event ID (y) of the related past event is not included (step S1203: No), the data management server #i assigns an empty set to a variable a (step S1204) and moves to step S1207.

On the other hand, in the case where the event ID (y) of the related past event is included (step S1203: Yes), the arrival point corresponding to the event ID (y) is acquired from the arrival position table 700 (step S1205). Then, the data management server #i assigns the arrival point corresponding to the event ID (y) to the variable a (step S1206).

Next, the data management server #i adds the event ID (x) of the new event to the variable a (step S1207). Then, the data management server #i registers the arrival point (a) in the arrival position table 700 in association with the event ID (x) of the new event (step S1208), and moves to step S1301 illustrated in FIG. 13.

In the flowchart of FIG. 13, first, the data management server #i assigns 1 to a variable n (step S1301). Then, the data management server #i acquires the nth monitoring target ID from the monitoring target table 800 (step S1302), and assigns the acquired monitoring target ID to a variable z (step S1303).

Next, the data management server #i acquires the arrival point corresponding to the event ID (x) of the new event from the arrival position table 700 (step S1304). Then, the data management server #i assigns the arrival point corresponding to the event ID (x) of the acquired new event to the variable a (step S1305).

Next, the data management server #i determines whether the value of the variable z is included or not in the content of the variable a (step S1306). Here, in a case where the value of the variable z is not included (step S1306: No), the data management server #i moves to step S1308.

On the other hand, in a case where the value of the variable z is included (step S1306: Yes), the access right to the detailed data corresponding to the monitoring target ID (z) in the local data space LS #i is set for the organization name (c) as the issuer of the new event (step S1307).

Next, the data management server #i increments the value of the variable n (step S1308) and determines whether the value of the variable n is equal to or less than a final item number of the monitoring target ID in the monitoring target table 800 or not (step S1309). Here, in a case where the value of the variable n is equal to or less than the final item number of the monitoring target ID (step S1309: Yes), the data management server #i returns to step S1302.

On the other hand, in a case where the value of the variable n is larger than the final item number of the monitoring target ID (step S1309: No), the data management server #i terminates the series of processing by the present flowchart.

As a result, when the event information of the new event is registered in the global data space GS, the data management server #i can register the information (arrival point) indicating the reachable position from the new event in the arrival position table 700. Furthermore, the data management server #i can set, for the issuer of the new event, the access right to the detailed data of the event to be monitored in the case where the new event is an event leading to the event to be monitored.

As described above, according to the data management server #i of the embodiment, in the case where the information regarding the new event is registered in the global data space GS, it is possible to specify the event linked to the new event by tracing the relation between the events based on the information stored in the global data space GS. The global data space GS stores the information that can specify the relation between the events shared by the data management servers #1 to #n. Then, according to the data management server #i, in the case where the event to be monitored is included in the specified event linked to the new event, it is possible to set the access right to the data related to the event to be monitored stored in the local data space LS #i that the local server manages, for the issuer of the new event. The event to be monitored is, for example, an event issued by the organization #i.

Thereby, the data management server #i can automatically set the access right to the data (the detailed data of the event, for example) that the local organization #i manages, for the issuer (another organization #j) of the new event when the new event leading to the event of the local organization #i is issued. Therefore, labor and time for the operator to set the access policy for the detailed data of the event of the local organization #i can be reduced. Furthermore, the user of the another organization #j becomes able to access the detailed data of the organization #i whose access is restricted, and can confirm the detailed data of the another event having relevance to the new event that the user issues, for example.

Furthermore, according to the data management server #i, in the case where the event to be monitored is not included in the events linked to the new event, it is possible not to set the access right to the data related to the event to be monitored for the issuer of the new event.

Thereby, the data management server #i can prevent the data that the local organization #i manages from being accessed by the issuer of the new event not linked to the event that the local organization #i issues.

Furthermore, according to the data management server #i, it is possible to determine whether the issuer of the new event is registered or not in the blacklist in the case where the event to be monitored is included in the events linked to the new event. Then, according to the data management server #i, in the case where the issuer of the new event is registered in the blacklist, it is possible not to set the access right to the data related to the event to be monitored stored in the local data space LS #i for the issuer of the new event.

Thereby, in the case where the issuer of the new event is an unreliable organization even if the event that the local organization #i issues is linked to the new event, the data management server #i can perform control such that access to the data that the local organization #i manages is not allowed.

Furthermore, according to the data management server #i, it is possible to calculate the distance between the new event and the event to be monitored by tracing the relation between the events based on the information stored in the global data space GS in the case where the event to be monitored is included in the events linked to the new event. Then, according to the data management server #i, in the case where the calculated distance is equal to or larger than the threshold, it is possible not to set the access right to the data related to the event to be monitored stored in the local data space LS #i for the issuer of the new event.

Thereby, the data management server #i can prevent the access right to the data that the local organization #i manages from being set for the issuer of the new event having little relevance to the new event even if the event that the local organization #i issues is linked to the new event.

Furthermore, according to the data management server #i, it is possible to record the information indicating the relation between the new event and the past event in the tracking target DB 610 (for example, the monitoring target table 800) every time information that can specify the relation between the new event and the past event is registered in the global data space GS. The tracking target DB 610 is an example of a storage unit of the data management server #i that stores the information indicating the relation between the events based on the information stored in the global data space GS. Then, according to the data management server #i, it is possible to specify the event linked to the new event by referring to the tracking target DB 610.

Thereby, the data management server #i can specify the event linked to the new event by referring to the tracking target DB 610 in the local server without accessing the global data space GS and tracing the relation between the events from scratch every time the event information regarding the new event is registered. For example, it is possible to reduce a processing load for specifying the event linked to the new event by holding the information so that the relation between the events can be easily specified, as in the arrival position table 700 illustrated in FIG. 7.

Based on these points, according to the data management server #i, it is possible to automate the setting of the access policy for allowing the access to the detailed data of the event of the local organization #i for another organization #j as the issuer of the new event. Thereby, for example, it is possible to reduce workload and work time for setting the access policy for ensuring the traceability of data across companies.

Note that the data management method described in the present embodiment may be implemented by executing a program prepared in advance on a computer such as a personal computer or a workstation. The present data management program is recorded on a computer-readable recording medium such as a hard disk, a flexible disk, a CD-ROM, a DVD, or a USB memory, and is read from the recording medium to be executed by a computer. Furthermore, the present data management program may be distributed via a network such as the Internet.

Furthermore, the data management device 101 (data management server #i) described in the present embodiment may also be implemented by a special-purpose integrated circuit (IC) such as a standard cell or a structured application specific integrated circuit (ASIC) or a programmable logic device (PLD) such as a field-programmable gate array (FPGA).

## Claims

1. A data management program comprising instructions which, when executed by a computer operable as a data management device included in a plurality of data management devices, cause the computer to execute processing comprising:
in a case where information regarding a new event is registered in a first storage that stores information capable of specifying a relation between events shared by the plurality of data management devices, specifying an event linked to the new event by tracing the relation between events based on the information stored in the first storage; and
in a case where an event to be monitored is included in the specified events linked to the new event, setting, for an issuer of the new event, an access right to data related to the event to be monitored stored in a second storage managed by a local device.

2. The data management program according to claim 1, the processing further comprising:
in the case where the event to be monitored is included in the events linked to the new event, determining whether the issuer of the new event is registered in a blacklist; and
in a case where the issuer of the new event is registered in the blacklist, not setting, for the issuer of the new event, the access right to the data related to the event to be monitored stored in the second storage.

3. The data management program according to claim 1 or 2, the processing further comprising:
in the case where the event to be monitored is included in the events linked to the new event, calculating a distance between the new event and the event to be monitored by tracing the relation between events based on the information stored in the first storage, wherein
the setting of the access right includes,
in a case where the calculated distance is equal to or larger than a threshold, not setting, for the issuer of the new event, the access right to the data related to the event to be monitored stored in the second storage.

4. A data management method implemented by a computer operable as a data management device included in a plurality of data management devices, the data management method comprising:
in a case where information regarding a new event is registered in a first storage that stores information capable of specifying a relation between events shared by the plurality of data management devices, specifying an event linked to the new event by tracing the relation between events based on the information stored in the first storage; and
in a case where an event to be monitored is included in the specified events linked to the new event, setting, for an issuer of the new event, an access right to data related to the event to be monitored stored in a second storage managed by a local device.

5. A data management device configured to be any one of a plurality of data management devices, the data management device comprising:
a memory; and
a processor coupled to the memory, the processor being configured to perform processing, the processing including:
in a case where information regarding a new event is registered in a first storage that stores information capable of specifying a relation between events shared by the plurality of data management devices, specifying an event linked to the new event by tracing the relation between events based on the information stored in the first storage; and
in a case where an event to be monitored is included in the specified events linked to the new event, setting, for an issuer of the new event, an access right to data related to the event to be monitored stored in a second storage managed by a local device.
